# EUROPEAN PATENT SPECIFICATION

(11) **EP 2 266 496 B1**
(45) Date of publication and mention of the grant of the patent: **09.11.2011**
(21) Application number: 09177616.1
(22) Date of filing: 01.12.2009
(51) Int. Cl.: A61C 7/20, A61C 7/28

(54) **Orthodontic bracket**
Orthodontische Klammer
Support orthodontique

(30) Priority: 23.06.2009 JP 2009149185
(43) Date of publication of application: 29.12.2010
(73) Proprietor: Scuzzo, Giuseppe, 00122 Ostia Lido (IT); Takemoto, Kyoto, Chiyoda Tokyo 102-0074 (JP)
(72) Inventor: Takemoto, Kyoto, Tokyo 102-0074 (JP)
(74) Representative: Papa, Elisabetta

(56) References cited:
- EP-A2- 0 714 639
- WO-A2-2009/057937
- US-A- 5 906 486

## Description

The present invention relates to an orthodontic bracket attached to a tooth to correct teeth alignment.

### PRIOR ART

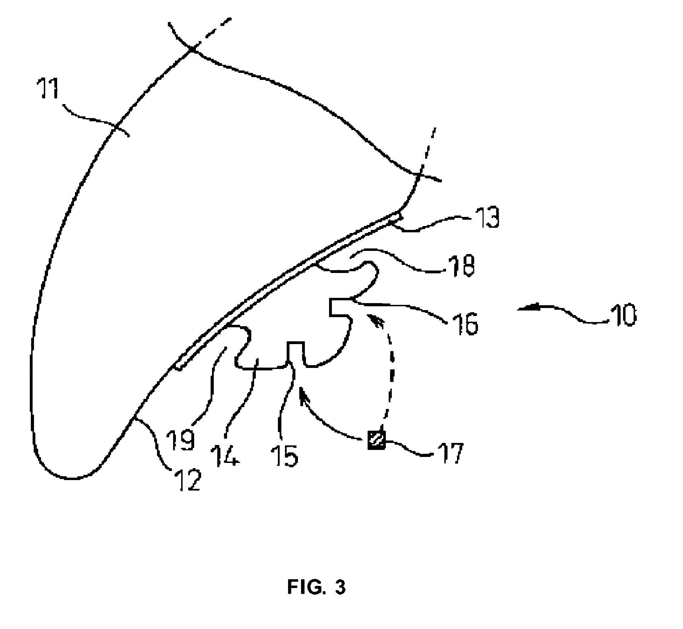

In recent orthodontics, orthodontic brackets attached to teeth and a wire attached to the brackets have been disposed on the inner side of the teeth, that is, on the lingual side, from an aesthetic point of view. For example, an orthodontic bracket 10 described in Japanese Examined Patent Publication (Kokoku) No. 57-44967 includes a plate-shaped pad 13 glued to a surface 12 of a tooth 11 that is on the lingual side (inner side) and a bracket body 14 integrated with the pad 13 by brazing or any other suitable method in such a way that the bracket body 14 stands erect from the pad 13, as shown in Fig. 3.

The bracket body 14 has a portion that looks like three fingers, which forms a main slot 15 and a sub-slot 16, the main slot 15 opening vertically downward (when the orthodontic bracket 10 is used in the maxilla) or vertically upward (when the orthodontic bracket 10 is used in the mandible) in a state in which the orthodontic bracket 10 is attached to the lingual surface of a tooth, the sub-slot 16 opening horizontally toward the lingua when the orthodontic bracket 10 is attached as described above. A metal wire 17 made of, for example, an alloy and having a rectangular or any other suitable cross-sectional shape is then inserted into the slot 15 or 16.

The intrinsic elasticity of the wire 17 produces a bending force, a tension, or any other force as a restoring force that serves as a corrective force or moment acting on the tooth 11, which deviates from a normal dental arc or is skewed incorrectly, and the force or moment shifts or rotates the tooth 11 over time to a position on the normal dental arc. Further, undercut portions 18 and 19 formed as upper and lower gaps between the bracket body 14 and the pad 13 are used to catch a thin wire, a rubber band, or any other suitable fastener for ligating and securing the wire 17 inserted into the main slot 15 (or the sub-slot 16) to the orthodontic bracket 10.

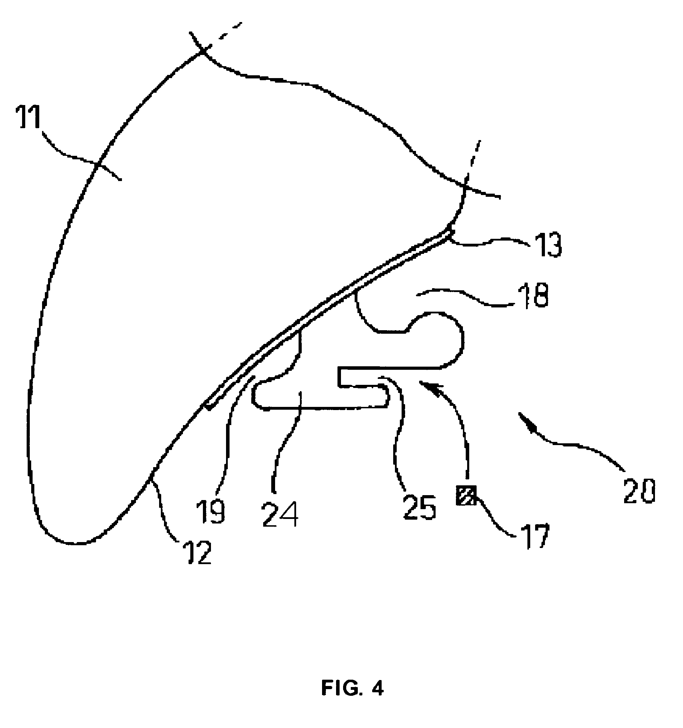

An orthodontic bracket 20 described in United States Patent No. 4,337,037 includes a pad 13 similar to the pad used in the orthodontic bracket 10 shown in Fig. 3, and a bracket body 24 integrated with the pad 13 has a main slot 25 opening horizontally toward the lingua in a state in which the orthodontic bracket 20 is attached to a tooth, as shown in Fig. 4. Further, as in the orthodontic bracket 10 shown in Fig. 3, upper and lower undercut portions 18 and 19 are formed between the bracket body 24 and the pad 13, and at least one of the undercut portions can be used to ligate and secure a wire 17, which is inserted in a predetermined position in the main slot 25.

EP0714639 and US5906486 disclose orthodontic brackets with arch wire slots having a rectangular cross-sectional shape.
When any of the orthodontic brackets of related art described above is used to perform lingual orthodontics, it has been pointed out that the ligation is a cumbersome task. In particular, an orthodontic bracket used in the maxilla and having a large anterior tooth torque does not provide a force large enough to press the wire to the bottom of the slot, and a single tie results in poor ligation. In this case, ligation using double over tie, which is more cumbersome, has been used. When a small-sized orthodontic bracket is used, since the width of the slot is narrow and the depth thereof is shallow, it is important to perform ligation very carefully in order to reliably press the wire into the slot. If the ligation is loose, the play between the slot and the wire is large, which adversely affects rotation and torque control.

An orthodontic bracket having a horizontally oriented slot is problematic, for example, in that loose ligation may not allow improvement in rotation or may cause the wire to disengage from the slot during anterior retraction, resulting in torque control failure. On the other hand, when an orthodontic bracket having a vertically oriented slot is used, loose ligation may not allow tipping or height control or may not allow sufficient torque control as well. As a result, in both the horizontally and vertically oriented slots, loose ligation prevents reliable three-dimensional tooth control. On the other hand, tight ligation that allows the wire to be securely pressed against the bottom of the slot may increase the friction between the wire and the ligation wire, preventing smooth tooth motion.

### DISCLOSURE OF THE INVENTION

To solve the problems described above, the object of the invention is to provide an orthodontic bracket as defined in claim 1 that does not rely on how an operator is skilled in ligation and can minimize the friction.

According to the invention is an orthodontic bracket attached to a tooth to correct the row of teeth, the orthodontic bracket comprising a slot having an opening into which a wire can be inserted in the vertical direction, and a shutter that can slide to block or unblock the opening. The wire is placed in the slot by causing the shutter to slide and unblock the opening, inserting the wire through the opening, and causing the shutter to slide and block the opening.

According to the invention, the slot has a square cross-sectional shape.
According to a second aspect of the invention, the length of the slot ranges from 1.0 to 2.0 mm or from 2.0 to 3.5 mm.
According to a third aspect of the invention, the position of the center of the slot is determined in such a way that the ratio of the distance from the crown lower end to the crown height ranges from 0.2 to 0.5 or from 0.3 to 0.7.

According to the invention, the wire will not disengage from the slot, whereby the torque control can be reliably performed. Further, it is not necessary to perform ligation that causes the wire to be securely pressed against the bottom of the slot. Since the ligation is not tight, the tooth in question can be smoothly shifted.
According to the invention, the play between the wire and the slot in the horizontal direction can be the same as that in the vertical direction.
According to the second aspect of the invention, an optimum corrective force and moment can be obtained.
According to the third aspect of the invention, it is possible to use a wire having a straight configuration including a simple, smooth curve, such as an arc, and straight lines connected to both ends of the curve.

### BRIEF DESCRIPTION OF THE DRAWINGS

Figs. 1A, 1B, and 1C are a plan view, a side view, and a bottom view of an orthodontic bracket according to an embodiment of the invention;
Fig. 2 is a plan view of a wire useable with the orthodontic bracket shown in Figs. 1A to 1C;
Fig. 3 is a side view of an orthodontic bracket of related art; and
Fig. 4 is a side view of another orthodontic bracket of related art.

### BEST MODE FOR CARRYING OUT THE INVENTION

An embodiment of the invention will be described below with reference to the drawings. It is however noted that the invention can be implemented in a variety of different aspects and is not limited to the embodiment described below. In the present specification, the portions having the same or similar functions have the same reference characters and no redundant description thereof will be made.

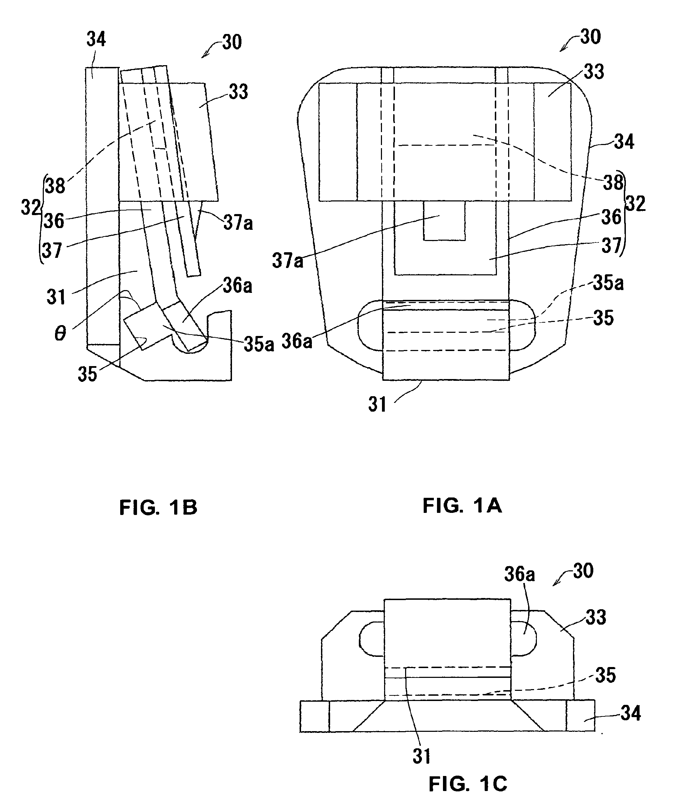

Figs. 1A, 1B, and 1C are a plan view, a side view, and a bottom view of an orthodontic bracket according to the embodiment of the invention, respectively. The orthodontic bracket 30 includes a bracket body 31, a shutter 32, a shutter holder 33, and a pad 34.

The bracket body 31 has a slot 35 formed therein, to which a wire 40, which will be described later, is attached. The slot 35 has a square cross-sectional shape and has a short length. The slot 35 has an opening 35a into which the wire can be inserted in the vertical direction. On the other hand, a slot of an orthodontic bracket of related art has a rectangular cross-sectional shape. When a thin, round wire is used to perform leveling, in particular, the play between the horizontally oriented slot and the wire is large, and hence sufficient improvement in rotation often cannot be made. To mitigate the problem, the slot 35 of the orthodontic bracket 30 of the present embodiment has a square cross-sectional shape and has a short length so that three-dimensional control including rotation control, tipping control, and torque control can be performed with low friction.

The play between the slot 35 and the wire 40 in the horizontal direction is the same as that in the vertical direction, which is significantly advantageous in improving the rotation control, tipping control, and torque control, as compared to a rectangular slot of related art.
The length of one side of the square cross-sectional shape of the slot preferably ranges from 0.38 to 0.48 mm (0.015 to 0.019 inches). When the length of one side is within this range, an optimum corrective force and moment can be obtained by adjusting the length of the slot, the distance between the brackets, the size of the wire, and other parameters.

The length of the slot 35 can be, for example, 1.5 mm when the orthodontic bracket 30 is used in the maxilla, whereas it can be 1.3 mm when used in the mandible.
It is however noted that the length of the slot is not limited to the values described above. The length of the slot 35 preferably ranges from 1.0 to 2.0 mm. When the length of the slot is within this range, an optimum corrective force and moment can be obtained by adjusting the length of one side of the square cross-sectional shape of the slot, the distance between the brackets, the size of the wire, and other parameters.
As described above, the length of the slot of the orthodontic bracket of the present embodiment can be shorter than the length of the slot of an orthodontic bracket of related art.

Since the length of the slot of the orthodontic bracket of the present embodiment is shorter than the length of the slot of an orthodontic bracket of related art, the following advantages are provided: That is, reducing the length of the slot allows the distance between adjacent brackets to be increased. A large distance between adjacent brackets prevents the wire from being plastically deformed due to a large magnitude of stress acting thereon. No plastic deformation results in no increase in friction.

The torque θ of the slot 35 shown in Fig. 1B preferably ranges from 40 to 70 degrees. When the torque θ of the slot is within this range, the orthodontic bracket 30 can be attached to a tooth in accordance with the form thereof.

The slot 35 is formed in the bracket body 31 in such a way that the opening 35a of the slot 35 is oriented in a substantially vertical direction, whereby the wire 40 is readily placed in the slot 35 and at the same time the wire 40 is readily bent in this process.

In Fig. 1B, the slot 35 is positioned in a lower portion of the orthodontic bracket 30. The orthodontic bracket 30 is attached to a tooth in such a way that the slot 35 is positioned on the labial side.
The vertical position of the centroid of the square cross-sectional shape of the slot 35 is now defined as the "position of the center of the slot." The ratio of the distance from the lower end of the crown of the tooth to the height of the crown is further defined as the "ratio of the distance from the crown lower end to the crown height." The position of the center of the slot is preferably determined in such a way that the ratio of the distance from the crown lower end to the crown height ranges from 0.2 to 0.5. When the position of the center of the slot is determined this way, a wire having a "straight configuration" formed of a simple, smooth curve, such as an arc, and straight lines connected to both ends of the curve can be advantageously used.

The shutter 32 is attached to the bracket body 31 via the shutter holder 33 so that the shutter 32 slides to block or unblock the opening 35a of the slot 35. The shutter 32 includes a rectangular plate-shaped shutter body 36, a rectangular plate-shaped stopper 37, and a rectangular plate-shaped spacer 38. A lid 36a that blocks or unblocks the opening 35a of the slot 35 is formed at the lower end of the shutter body 36. A tab 37a is formed at the lower end of the stopper 37 so that the shutter 32 does not disengage from the shutter holder 33.

The shutter body 36 and the stopper 37 are overlaid with the spacer 38 interposed therebetween at the upper end thereof and joined with each other. The shutter holder 33 has a U-like cross-sectional shape; the upper end of the shutter 32 is inserted into the U-shaped portion, and both ends of the U-shaped portion are joined with the pad 34. When the lid 36a of the shutter body 36 blocks the opening 35a of the slot 35, the tab 37a of the stopper 37 abuts the shutter holder 33 and hence the shutter 32 does not disengage from the shutter holder 33. In this way, the lid 36a is reliably secured to cover the opening 35a of the slot 35, and serves as a sturdy inner wall of the slot 35. Pressing the lower end of the stopper 37 toward the shutter body 36 so that the stopper 37 is bent and lifting the lower end of the stopper 37 cause the tab 37a of the stopper 37 to enter the U-shaped portion of the shutter holder 33. Since the shutter 32 can thus be lifted, the lid 36a of the shutter body 36 unblocks the opening 35a of the slot 35.

When torque control is performed, the thus configured slot 35 does not allow the wire 40 to disengage from the slot 35 during anterior retraction. Therefore, even when the wire 40 has a square cross-sectional shape, the play in the torque is small and the torque control can be sufficiently performed. Among others, since the low friction provides a smaller, continuous corrective force, smooth tooth motion is likely achieved. Further, since the smaller force provides a sufficient corrective force, the pain that the patient may feel at the tooth under orthodontic treatment is likely reduced.

The pad 34 has a rectangular plate shape and is integrated with the bottom of the bracket body 31 by brazing or any other suitable method. The pad 34 is glued or otherwise attached to the lingual-side surface of a tooth. Since the pad 34 is thin and attached to a portion close to the gingiva, even when the orthodontic bracket 30 is attached to an anterior tooth in the maxilla and faces the tip of an anterior tooth in the mandible, the tip of the anterior tooth in the mandible does not tend to hit the orthodontic bracket 30. Therefore, since the orthodontic bracket 30 will not come into contact with the tip of any anterior tooth in the mandible, no gap will be formed between upper and lower molar teeth, whereby there is no risk of root resorption at the anterior tooth. It is noted that when the pad 34 is glued onto the lingual-side surface of a tooth, any indentation in the surface of the tooth can be filled with an adhesive or the angle of the surface of the pad 34 to the surface of the tooth can be delicately adjusted by using an adhesive.

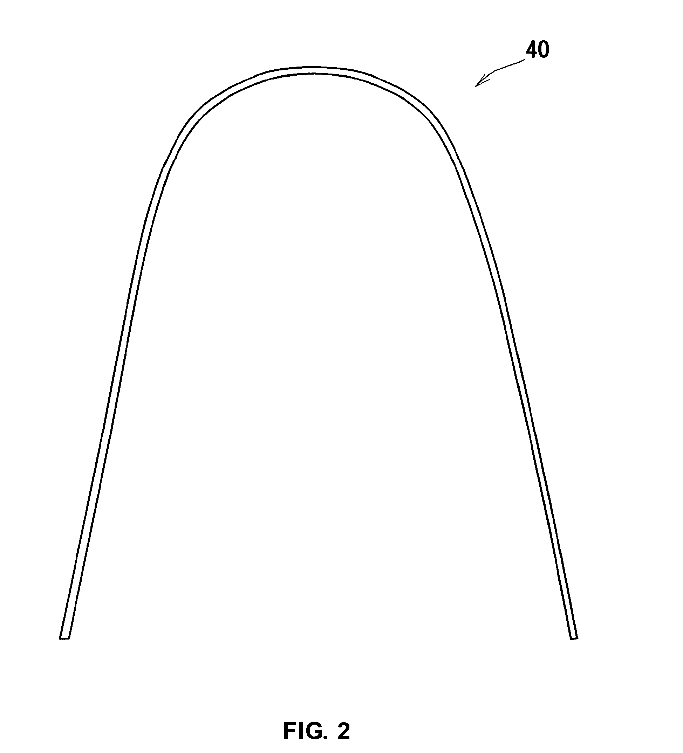

The wire 40 is a straight, arch-shaped wire smoothly curved at a large radius of curvature but having no sharply bent portion, and requires almost no additional bending force to produce plastic deformation. The wire 40 has a straight configuration formed of a simple, smooth curve, such as an arc, and straight lines connected to both ends of the curve without any step between the curve and the straight lines, has no bent portion through plastic deformation, and rests entirely in a horizontal plane when the wire 40 is not biased, as shown in Fig. 2. When the wire 40 is attached to a tooth to be corrected, the wire 40 is deformed within its elasticity limit (when a wire made of a shape memory alloy is used, the wire is deformed within its super-elasticity limit) and inserted into the slot 35 of the orthodontic bracket 30. The elastic force of the wire 40 then produces a corrective force or moment acting on the tooth via the orthodontic bracket 30.

Since the thus configured wire 40 does not need any plastically deformed, bent portion in advance, the wire 40 can be readily produced and industrially manufactured in volume, providing a significant advantage of cost reduction. Further, when the position of the wire 40 is shifted and adjusted relative to the orthodontic bracket 30 in the course of orthodontic treatment, no cumbersome operations, such as re-bending any bent portion and re-ligation, are necessary, unlike a mushroom-shaped archwire of related art, whereby the sliding adjustment of the wire 40 is very readily carried out. Therefore, the burdens on both the operator and patient are reduced, and individual difference among the operators is relatively reduced. Further, the fact that it is not basically necessary to bend the wire 40 so that the shape thereof conforms to the dental arch of each individual patient is significantly advantageous in that it is possible to use a material that more flexibly undergoes super-elastic deformation than a wire of related art but is extremely difficult to be bent through plastic deformation, such as a shape memory alloy made of nickel, titanium, copper, or other elements.

When the orthodontic bracket of the present embodiment was used in treatment, the chair time and treatment time were shortened, and shifting a tooth, such as tipping control and rotation control, was reliably performed in a short period. Specifically, the period was reduced by 10 to 40% as compared to a case where an orthodontic bracket of related art was used.

While the orthodontic bracket of the present embodiment has been described with reference to the case where it is attached to the lingual side of a tooth, the orthodontic bracket of the present embodiment can be attached to the labial side of a tooth.

In this case, the length of one side of the square cross-sectional shape of the slot preferably rangers from 0.457 mm to 0.559 mm (0.018 to 0.022 inches). When the length of one side is within this range, an optimum corrective force and moment can be obtained by adjusting the length of the slot, the distance between the brackets, the size of the wire, and other parameters.

The length of the slot 35 preferably ranges from 2.0 to 3.5 mm. When the length of the slot is within this range, an optimum corrective force and moment can be obtained by adjusting the length of one side of the square cross-sectional shape of the slot, the distance between the brackets, the size of the wire, and other parameters.

The torque θ of the slot 35 preferably ranges from -5 to 30 degrees. When the torque θ of the slot is within this range, the orthodontic bracket 30 can be attached to a tooth in accordance with the form thereof. Depending on the value of the torque θ, it is possible to provide as appropriate an opening into which a wire can be horizontally inserted and a shutter that can slide to block or unblock the opening.
The position of the center of the slot is preferably determined in such a way that the ratio of the distance from the crown lower end to the crown height ranges from 0.3 to 0.7.

## Claims

1. An orthodontic bracket (30) apt to be attached to a tooth to correct the row of teeth, the orthodontic bracket (30) comprising:
- a slot (35) having an opening (35a) into which a wire can be inserted in the vertical direction; and
- a shutter (32) that can slide to block or unblock the opening (35a),
wherein the overall arrangement is such that, in use, the shutter (32) is caused to slide so as to unblock the opening (35a) in the slot (35) thus allowing the wire be placed through the opening (35a) in the slot (35), and the shutter (32) is then caused to slide and block the opening (35a) again, and **characterized in that**
the slot (35) has a square cross-sectional shape.

2. The orthodontic bracket (30) according to claim 1, wherein the length of the slot (35) ranges from 1.0 to 2.0 mm or from 2.0 to 3.5 mm.

## Patentansprüche

1. Orthodontische Klammer (30), die geeignet ist, an einem Zahn befestigt zu werden, um die Zahnreihe zu korrigieren, wobei die orthodontische Klammer (30) umfasst:
- einen Schlitz (35), der eine Öffnung (35a) hat, in die ein Draht in vertikaler Richtung eingeführt werden kann; und
- einen Verschluss (32), der verschiebbar ist, um die Öffnung (35a) zu blockieren oder freizugeben,
wobei die Gesamtanordnung so getroffen ist, dass im Gebrauch der Verschluss (32) veranlasst wird, sich so zu verschieben, dass die Öffnung (35a) in dem Schlitz (35) freigegeben wird, was erlaubt, den Draht durch die Öffnung (35a) hindurch in dem Schlitz (35) zu platzieren, und dass der Verschluss (32) dann veranlasst wird, sich zu verschieben und die Öffnung (35a) wieder zu blockieren, und
**dadurch gekennzeichnet, dass** der Schlitz (35) eine quadratische Querschnittsform hat.

2. Orthodontische Klammer (30) nach Anspruch 1, wobei die Länge des Schlitzes (35) von 1,0 bis 2,0 mm oder von 2,0 bis 3,5 mm reicht.

## Revendications

1. Support orthodontique (30) apte à être fixé sur une dent pour corriger la rangée de dents, le support orthodontique (30) comprenant :
- une fente (35) comportant une ouverture (35a) dans laquelle un fil métallique peut être inséré dans la direction verticale; et
- un obturateur (32) qui peut glisser pour bloquer ou débloquer l'ouverture (35a), dans lequel l' agencement d'ensemble est tel que, en utilisation, on fait glisser l'obturateur (32) pour débloquer l'ouverture (35a) de la fente (35) afin de permettre au fil d'être placé à travers l'ouverture (35a) de la fente (35), puis on fait glisser l'obturateur (32) pour rebloquer l'ouverture (35a), et **caractérisé en ce que** la fente (35) est de section transversale carrée.

2. Support orthodontique (30) selon la revendication 1, dans lequel la longueur de la fente (35) est comprise entre 1,0 et 2,0 mm ou entre 2,0 et 3,5 mm.
